# EUROPÄISCHE PATENTSCHRIFT

(11) **EP 0 870 526 B1**
(45) Veröffentlichungstag und Bekanntmachung des Hinweises auf die Patenterteilung: **14.03.2001**
(21) Anmeldenummer: 98106330.8
(22) Anmeldetag: 07.04.1998
(51) Int. Cl.: B01D 33/00, B01D 29/74

(54) **Filtervorrichtung zum Reinigen von Verunreinigungen enthaltenden Flüssigkeiten**
Filter device for cleaning pollutant containing liquids
Dispositif de filtre pour purifier des liquides contenant des polluants

(30) Priorität: 07.04.1997 DE 29706121 U; 02.08.1997 DE 19733572; 03.04.1998 DE 19815006
(43) Veröffentlichungstag der Anmeldung: 14.10.1998
(73) Patentinhaber: Grosswäscherei Oelkers, 28199 Bremen (DE)
(72) Erfinder: Manig, Heinz Otto, 28357 Bremen (DE); Bohms, Walter, 28359 Bremen (DE); Grunewald, Heinz, 28357 Bremen (DE)
(74) Vertreter: Eisenführ, Speiser & Partner

(56) Entgegenhaltungen:
- WO-A-90/00435
- FR-A- 2 550 710
- US-A- 3 931 016
- SOVIET INVENTIONS ILLUSTRATED Week 8622 13.Juni 1986 Derwent Publications Ltd., London, GB; AN 86143214 XP002072459 & SU 1 191 094 A (LENGD AGRIC INST (LEWB)) , 15.November 1985
- SOVIET INVENTIONS ILLUSTRATED Week 8401 15.Februar 1984 Derwent Publications Ltd., London, GB; AN 84004343 XP002072460 & SU 1 000 069 A (G.A.FEOKISTOV) , 5.März 1983

## Beschreibung

Die vorliegende Erfindung betrifft eine Filtervorrichtung zum Reinigen von Verunreinigungen enthaltenden Flüssigkeiten, insbesondere mit Feststoffen verunreinigten Abwässern, mit einer um eine senkrechte Achse drehbar gelagerte Siebtrommel zum Ausfiltern der Verunreinigungen, der die zu reinigende Flüssigkeit auf der Außenseite zugeführt und von deren Innenseite die gereinigte Flüssigkeit abgeführt wird, mit einem wahlweisen einschaltbaren Drehantrieb für die Siebtrommel zum Abschleudern der auf der Außenseite abgelagerten Verunreinigungen, und mit einem die Siebtrommel umgebenden, zusammen mit dieser angetriebenen Behälter zum Auffangen der abgeschleuderten Verunreinigungen.

Es sind bereits Filtervorrichtungen zum Reinigen von verunreinigten Flüssigkeiten bekannt, die eine um eine senkrechte Achse drehbare Siebtrommel aufweisen. Die zu reinigende Flüssigkeit wird auf der Außenseite zugeführt, und von deren Innenseite wird die gereinigte Flüssigkeit abgeführt. Sobald sich eine bestimmte Menge an Verunreinigungen auf der Außenseite der Siebtrommel abgesetzt hat, wird die Flüssigkeitszufuhr und -abfuhr unterbrochen und die Siebtrommel durch einen Drehantrieb in Rotation versetzt, wodurch die auf der Außenseite abgelagerten Verunreinigungen nach außen abgeschleudert werden. Diese abgeschleuderten Verunreinigungen werden dann in einem die Siebtrommel umgebenden Behälter aufgefangen und abgeleitet (siehe hierzu WO 90/00435A1).

Außerdem ist es aus der SU 1000069A bekannt, eine Mehrzahl von Filtertrommeln um eine Achse wie Satellitenräder anzuordnen und wie Satellitenräder in Rotation zu versetzen, um die Abschleuderwirkung zu vergrößern. Schließlich zeigt die Druckschrift WO 90/00435 A1 ein Ausführungsbeispiel mit rotierbarer Siebtrommel und einem mitrotierenden Abschirmzylinder, der die Filtertrommel umgibt und beim Abschleudern die Verunreinigungen auffängt. Die Verunreinigungen fallen vom Abschirmzylinder jedoch durch die Schwerkraft nach unten und sammeln sich auf dem Gehäuseboden.

Der vorliegenden Erfindung die Aufgabe zugrunde, eine Filtervorrichtung der eingangs genannten Art derart zu verbessern, dass eine wirkungsvollere und einfachere Abführung der von der Siebtrommel auf den umgebenden Behälter abgeschleuderten Verunreinigungen ermöglicht wird.

Diese Aufgabe wird gemäß der vorliegenden Erfindung dadurch gelöst, dass der die Siebtrommel umgebende Behälter kegelstumpfförmig und nach oben erweitert ausgebildet ist, an dessen erweitertem Ende ein Auslass für die abgeführten Verunreinigungen vorgesehen ist.

Die erfindungsgemäße Vorrichtung hat den Vorteil, dass eine kostengünstige und gleichbleibend gründliche Reinigung von Flüssigkeiten, insbesondere mit Feststoffen verunreinigten Abwässern, möglich ist. Durch Rotation des die Siebtrommel umgebenden kegelstumpfförmigen Behälters, der sich nach oben hin erweitert, werden die angesammelten Verunreinigungen entgegen der Gravitation nach oben herausgeschleudert und abgeführt. Ein manuelles Reinigen oder Entleeren der Filtervorrichtung ist nicht mehr erforderlich.

Gemäß einer vorteilhaften Ausführungsform kann die Umfangswandung des angetriebenen Behälters aus einem elastisch verformbaren Material bestehen, so dass dessen Form während der Rotation aufgrund der Fliehkräfte derart verändert wird, dass aufgenommene Verunreinigungen wirkungsvoller herausgeschleudert werden.

Gemäß einer weiteren Ausführungsform ist um den rotierenden Behälter im Bereich des erweiterten Endes ein Außenbehälter in der Form eines sich schneckenförmig erweiterten Auslasses zum Auswerfen der abgeschleuderten Verunreinigungen angeordnet. Auf diese Weise können die Verunreinigungen besonders wirkungsvoll und einfach aus dem Behälter entfernt werden, indem sie aus dem schneckenförmigen Teil des Aussenbehälters herausgeschleudert werden.

Weitere vorteilhafte Ausgestaltungen sind den Unteransprüche zu entnehmen.

Die Erfindung ist nachstehend anhand mehrerer Ausführungsbeispiele unter Bezugnahme auf die Zeichnungen beschrieben. Es zeigen:
- Fig. 1: ein erstes Ausführungsbeispiel einer erfindungsgemäßen FilterVorrichtung in einem Senkrechtschnitt;
- Fig. 2: eine in Fig. 1 durch I-I gekennzeichnete Draufsicht;
- Fig. 3: ein zweites Ausführungsbeispiel einer erfindungsgemäßen Filter-Vorrichtung in einem Senkrechtschnitt;
- Fig. 4: eine in Fig. 3 mit II-II gekennzeichnete Draufsicht;
- Fig. 5: eine in Fig. 3 mit III-III gekennzeichnete Draufsicht; und
- Fig. 6: ein drittes Ausführungsbeispiel einer erfindungsgemäßen Filter-Vorrichtung mit einem Leitblech.

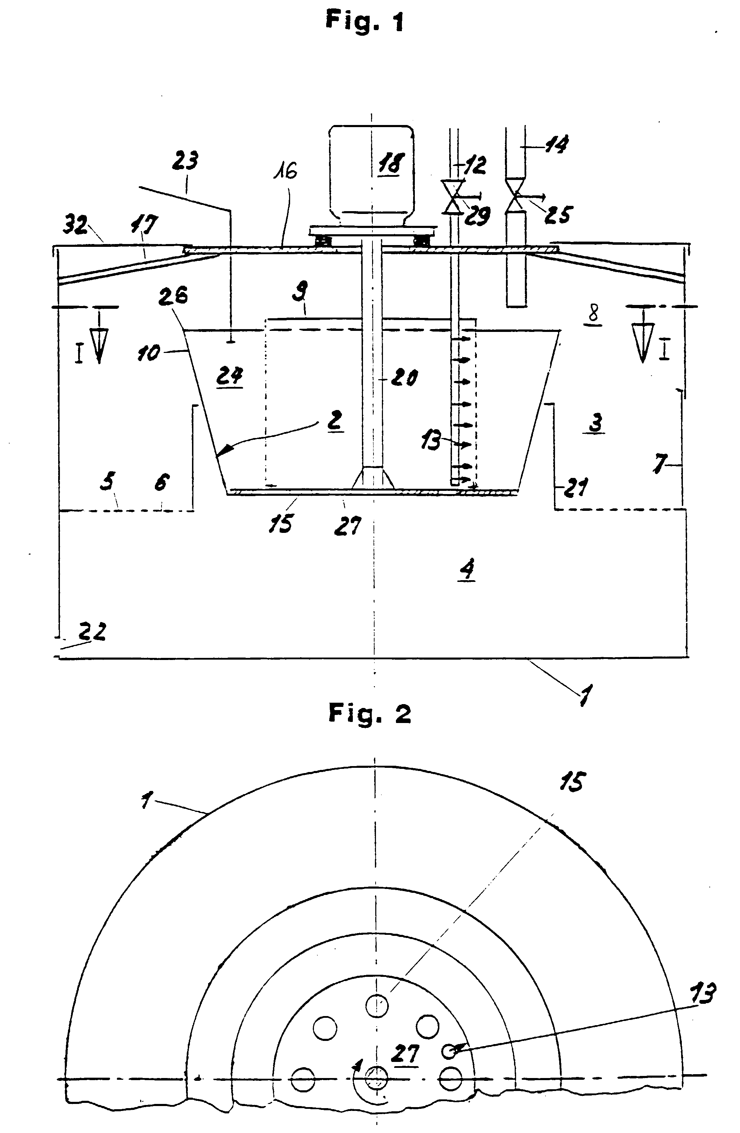

Die in den Figuren 1 und 2 dargestellte Filtervorrichtung zum Reinigen von Verunreinigungen enthaltenden Flüssigkeiten und zum Reinigen eines Filters dient insbesondere zum Filtern von in Großwäschereien anfallenden verunreinigten Flüssigkeiten, die sogenannte Flusen und andere Feststoffe enthalten.

Die Filtervorrichtung weist einen im wesentlichen zylinderförmigen Außenbehälter 1 auf, der aus flüssigkeitsdichtem Kunststoff oder Metall besteht. Eine Zentralplatte 16 ist mittels mehrerer Stützen 17 mit dem Außenbehälter 1 verbunden. Der Durchmesser der im wesentlichen kreisscheibenförmigen Zentralplatte 16 ist so bemessen, dass im Bereich der Stützen 17 ein ausreichend großer Zugang zu einem oberen Raum 3 des Außenbehälters 1 gewährleistet ist, wenn eine aus zwei Teilen bestehende Abdeckung 32 abgenommen worden ist.

Ein Antriebsmotor 18, der als Elektromotor mit einer Bremse ausgebildet ist, ist an der Zentralplatte 16 gelagert. Der Antriebsmotor 18 weist eine vertikal angeordnete Welle 20 auf, die mit ihrem unteren, freien Ende mit einem inneren, rotierbaren Behälter 2 fest verbunden ist, der innerhalb des Außenbehälters 1 angeordnet ist.

Der Behälter 2 weist eine mit der Welle 20 verbundene, beispielsweise verschweißte und im wesentlichen kreisscheibenförmige Grundplatte 27 auf, die auch als Boden bezeichnet werden kann. In der Grundplatte 27 sind mehrere Durchflußlöcher 15 ausgebildet, durch die Flüssigkeit hindurchströmen kann. An der Grundplatte 27 ist - konzentrisch zur durch die Welle 20 definierten Rotationsachse des Behälters 2 - eine Siebwandung oder ein Filter zum Zurückhalten von Verunreinigungen in Form einer zylindrischen Siebtrommel 9 befestigt. Die Siebtrommel 9 kann aus einem mit einer Vielzahl von Löchern versehenen Lochblech ausgebildet sein und mit der Grundplatte 27 verschraubt oder verschweißt sein. Der Filter kann sich zusammensetzen aus einer zuvor beschriebenen Siebtrommel 9 und einer an dieser befestigten Filtertextilie. Alternativ kann er aus einem starren, porösen Material bestehen, durch das Flüssigkeit hindurchströmen kann und das Verunreinigungen zurückhält. Der Behälter 2 kann als Drehkörper aufgefaßt werden, an dem ein Filter - in Form der Siebtrommel o. dgl. - befestigbar ist.

Der Behälter 2 weist ferner eine ebenfalls konzentrisch zur Rotationsachse angeordnete, rotationssymetrische Umfangswandung 10 in Form eines Kegelstumpfes auf. Die Umfangswandung 10 ist ebenfalls an der Grundplatte 27 befestigt und verläuft schräg in bezug auf die Rotationsachse (Welle 20). Der Durchmesser der Umfangswandung 10 nimmt mit zunehmendem Abstand von der Grundplatte 27 zu, so dass sich ein Ringraum 24, der außen durch die Umfangswandung 10 und innen durch die zylindrische Siebtrommel 9 begrenzt ist, nach oben hin erweitert.

Von der Innenwand des Außenbehälters 1 ausgehend ragt ein waagerecht verlaufender Ringboden 5 in den Innenraum des Außenbehälters 1 und wird auf seiner ringförmigen Innenkante von einer sich senkrecht nach oben erstreckenden zylindermantelförmigen Trennwand 21 begrenzt. Die Trennwand 21 und der Kreisboden 5 teilen den Innenraum der Außenbehälter 1 in einen als Auffangbehälter dienenden oberen Raum 3 und in einen unteren Sammelraum 4 auf. Der Ringboden 5 hat im wesentlichen die Form einer Kreisscheibe oder eines Kreisringes und ist mit mehreren Sickerlöchern 6 versehen. Die Trennwand 21 schließt eine zylinderförmige Öffnung ein, durch die sich den Behälter 2 erstreckt. Zwischen der ringförmigen Oberkante der Trennwand 21 und der kegelstumpfförmigen Außenwandung 10 des Behälters 2 verbleibt dabei ein Abstand, so daß es nicht zu Berührungen zwischen der Trennwand 21 und der Außenwandung 10 des Behälters 2 kommt. Bei der soeben beschriebenen Ausführungsform wird die Trennwand 21 von dem Ringboden 5 gehalten. Alternativ hierzu können auch vereinzelte Stützen vorgesehen sein, die die Trennwand 21 halten und der Ringboden 5 kann durch ein durchhängendes Netz ersetzt werden.

Der Außenbehälter 1 ist mit mindestens einer verschließbaren Öffnung 7 im Bereich des oberen Raumes 3 versehen, so daß der obere Raum 3 von außen zugänglich ist, um sich auf dem Ringboden 7 ansammelnde Filterrückstände in Form von Verunreinigungen, die sich auf noch zu beschreibender Weise sammeln, zu entfernen. Der Außenbehälter 1 weist einen Auslaßanschluß 22 auf, durch den sich im unteren Raum 4 ansammelnde, gereinigte Flüssigkeit aus dem Außenbehälter 1 entnehmbar ist.

Ein an der Zentralplatte 16 befestigtes Spritzrohr 13 ragt in vertikaler Anordnung in den Innenraum der zylindrischen Siebtrommel 9 und endet etwas oberhalb der Grundplatte 27 des Behälters 2. Das Spritzrohr 13 weist mehrere Spritzöffnungen auf, durch die ein Gas oder eine Spülflüssigkeit, die mit Hilfe eines Ventils 29 kontrolliert in das Spritzrohr 13 eingeleitet werden kann. Die Spülflüssigkeit wird in Richtung auf die Siebwandung der zylindrischen Siebtrommel 9 geleitet, um Verunreinigungen von der zylindrischen Siebtrommel 9 abzulösen, die sich dort während des Filtervorganges angesammelt haben.

An der Zentralplatte 16 ist ferner mindestens ein Detektor in Form eines Niveauschalters 23 befestigt, dessen Aufnehmer in den Ringraum 24 innerhalb des rotierbaren Behälters 2 hineinragt, um die Menge an Verunreinigungen, die sich in dem Ringraum 24 des rotierbaren Behälters 2 angesammelt haben, zu bestimmen. Im Auführungsbeispiel ist hierzu der Niveauschalter 23 vorgesehen, der auf einen mechanischen Druck, der von den angesammelten Verunreinigungen ausgeht, reagiert. Alternativ könnte ein optischer Sensor vorgesehen sein, um die Menge an Verunreinigungen innerhalb des Behälters 2 zu ermitteln.

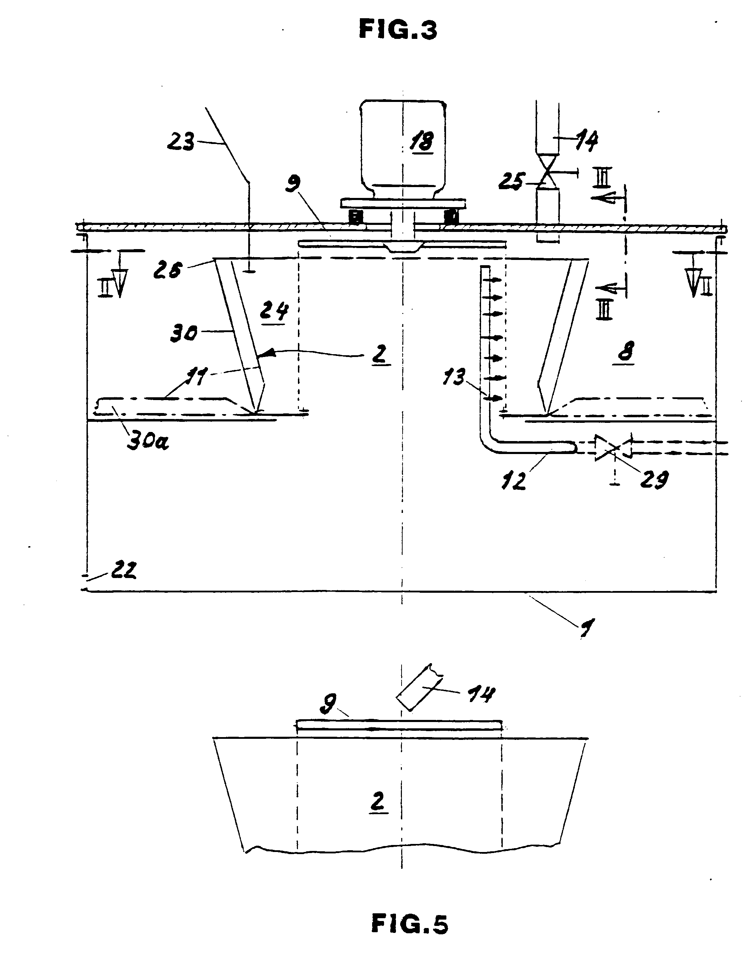

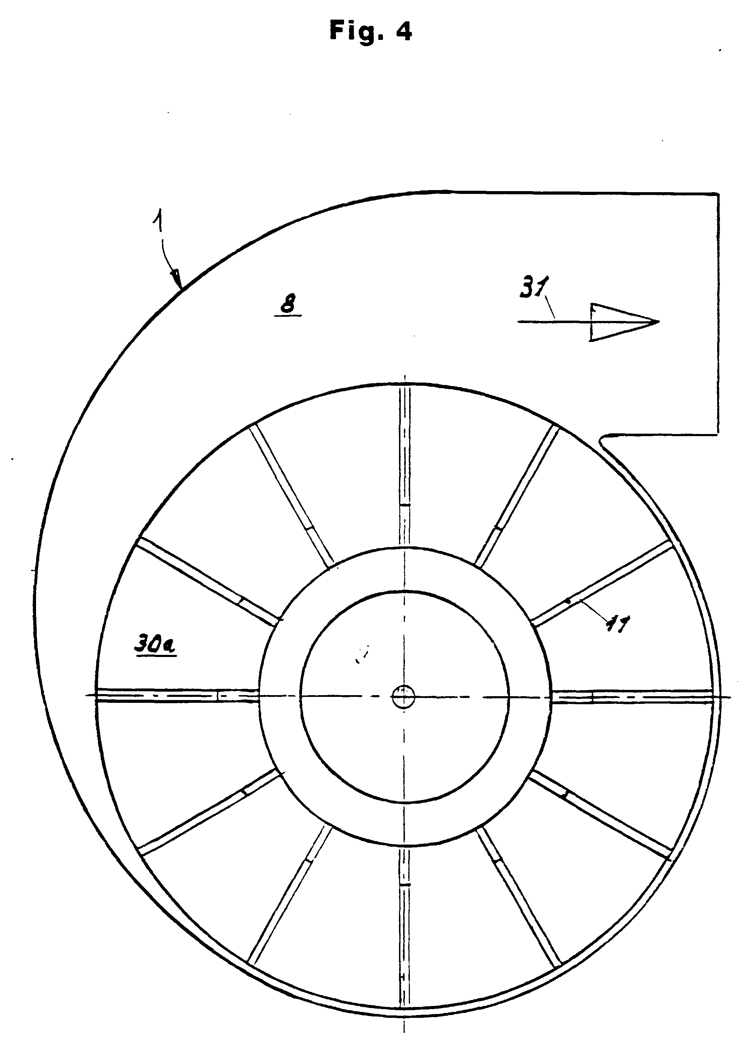

Ferner ist an der Zentralplatte 16 ein Zulaufrohr 14 für zu reinigende Flüssigkeit befestigt, in das außerhalb des Außenbehälters 1 ein Ventil 25 geschaltet ist und durch das zu reinigende Flüssigkeit von oben in den Behälter 2 in dem Ringraum 24 zwischen der kegelstumpfförmigen Umfangswandung 10 der Innentrommel 2 und der zylindrischen Siebtrommel einleitbar ist, wie die Figuren 1 und 3 zeigen.

Aus Figur 5 ist ersichtlich, daß mindestens der innerhalb des Außenbehälters 1 angeordnete Abschnitt des Zulaufrohrs 14 in einem Winkel gegenüber einer Vertikalen angeordnet ist, so daß die zu reinigende Flüssigkeit in einem Winkel gegenüber der Vertikalen in den rotierbaren Behälter 2 eingeleitet werden kann. Durch diese schräge Anordnung und Einleitung der zu reinigenden Flüssigkeit kann in dem Innenraum des Behälters 2, insbesondere in dem Ringraum 24 eine im wesentlichen umlaufende Ringströmung erzeugt werden, die dafür sorgt, dass die in dem Behälter 2 zurückgehaltenen Verunreinigungen innerhalb des Ringraums 24 verteilt werden. Alternativ kann die Bremse während des Einleitens der zu reinigenden Flüssigkeit gelöst sein, so dass der Behälter 2 aufgrund der schrägen Einleitung der Flüssigkeit leicht in Rotation versetzt wird.

Das in Figur 3 dargestellte alternative Ausführungsbeispiel einer erfindungsgemäβen Filtervorrichtung weist neben mehrerer Gemeinsamkeiten mit dem zuvor beschriebenen Ausführungsbeispiel im wesentlichen folgende Unterschiede auf:

Die Umfangswandung 30 des rotierbaren Behälters 2 ist mindestens abschnittsweise, im Ausführungsbeispiel vollständig, aus einem elastisch verformbaren Material hergestellt, so dass sich seine Form während der Rotation aufgrund von Fliehkräften in eine Form 30a ändert.Die Umfangswandung 30 besteht aus dehnbarem Gummi und ist ebenfalls im wesentlichen kegelstumpfförmig ausgebildet. Zur Erzielung einer ausreichenden Festigkeit weist die Umfangswandung 30 gegenüber der kegelstumpfförmigen Umfangswandung 10 gemäß Figur 1 eine größere Dicke auf.

Wie aus den Figuren 3 und 4 ersichtlich ist, sind an der inneren Oberfläche der Umfangswandung 30 des rotierbaren Behälters 2 Rippen 11 vorgesehen, die im Ausführungsbeispiel einstückig mit der Umfangswandung 30 aus Gummi ausgebildet sind und radial angeordnet sind (Figur 4). Die Form der Umfangswandung 30a des rotierbaren Behälters 2 bei starker Rotation ist gestrichelt in Figur 3 dargestellt.

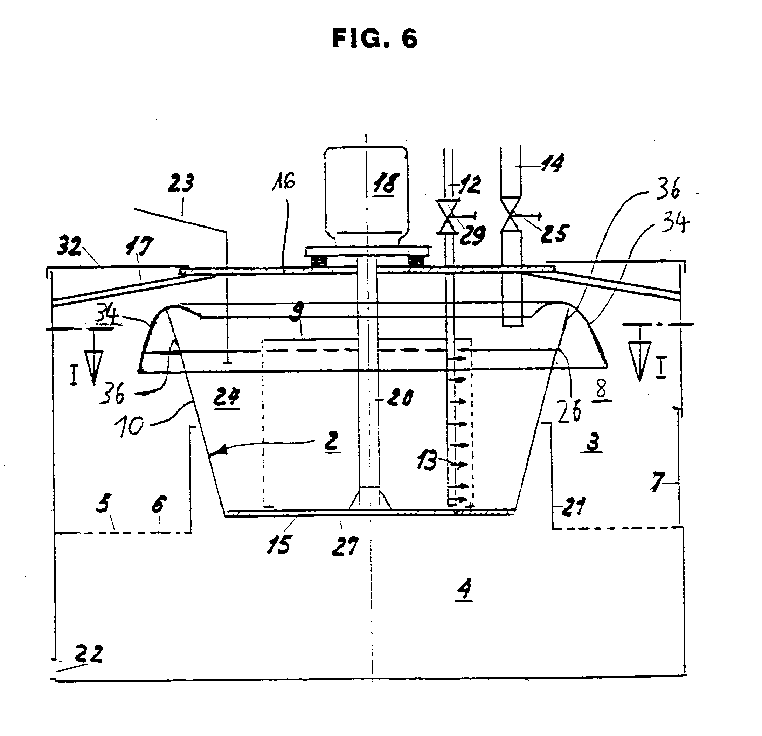

Das in Fig. 6 dargestellte alternative Ausführungsbeispiel der erfindungsgemäßen Vorrichtung entspricht im wesentlichen dem ersten Ausführungsbeispiel (Figuren 1 und 2), weist jedoch zusätzlich ein ringförmiges Leitblech 34 auf, das mittels mehrerer an dem Kegelstumpf 10 befestigter Stege 36 mit dem rotierbaren Behälter 2 verbunden ist und zusammen mit diesem rotiert werden kann.

Das im Ausführungsbeispiel im Querschnitt abschnittsweise gekrümmte Leitblech 34 dient dazu, während der Rotation des Kegelstumpfes 10 aus dem Ringraum 24 herausgeschleuderte Verunreinigungen, die sich dort angesammelt haben, aufzufangen und - in Fig. 6 nach unten - abzuleiten in den oberen Raum 3, genauer gesagt in Richtung auf den Ringboden 5 abzuleiten, wo sich die herausgeschleuderten Verunreinigungen ansammeln. Die von dem Leitblech 34 geleiteten Verunreinigungen weisen eine ausreichende Geschwindigkeit auf, um von dem Leitblech 34 geführt zu werden, so dass sie nicht zurück in den Ringraum 24 des rotierbaren Behälters 2 fallen. Das Leitblech 34 kann auch andere Formen mit unterschiedlichen Krümmungen aufweisen, um an die Eigenschaften der Verunreinigungen (Dichte, Feuchtegrad o.ä.) angepaßt zu sein. Die Stege 36 sind an dem oberen Rand 26 des Kegelstumpfs 10 befestigt.

In nicht dargestellter Weise kann das Leitblech 36 an der Zentralplatte 16 befestigt sein; in diesem Fall ist das Leitblech 34 ortsfest und nicht zusammen mit dem Kegelstumpf 10 rotierbar angeordnet.

Nachfolgend ist die Funktionsweise der erfindungsgemäßen Vorrichtung beschrieben:

Die zu reinigende, beispielsweise Feststoffe enthaltende Flüssigkeit wird durch das Zulaufrohr 14 bei geöffnetem Ventil 25 in den oberen Raum 3 des Außenbehälters 1 so eingeleitet, dass die Flüssigkeit in den Ringraum 24 des Behälters 2 eingeleitet wird. Aufgrund der in Figur 5 dargestellten schrägen Anordnung des Zulaufrohres 14 wird entweder der Behälter 2 bei gelöster Bremse des Antriebsmotors 18 in leichte Rotation versetzt aufgrund des durch die Schrägstellung aufgebrachten Impulses, oder bei angezogener Bremse wird die in dem Behälter 2 befindliche Flüssigkeit leicht in Rotation versetzt. In beiden Fällen kommt es zu einer gleichmäβigen Ablagerung von Verunreinigungen innerhalb des Ringraums 24. Verunreinigungen, beispielsweise in Form von Flusen, werden an der Siebwandung, die durch die zylindrische Siebtrommel 9 gebildet ist, zurückgehalten und sammeln sich in dem Ringraum 24 an. Die durch die zylindrische Siebtrommel 9 hindurchströmende und somit gereinigte oder gefilterte Flüssigkeit strömt in den Innenraum der zylindrischen Siebtrommel 9 und gelangt aufgrund von Gravitation zu der Grundplatte 27 mit den Durchflußlöchern 15, durch die die Flüssigkeit in den unteren Raum 4 strömt, aus dem sie durch den Anschluß 22 abfließt.

Auf prinzipiell gleiche Weise wird die Flüssigkeit mit einer Vorrichtung gemäß Figur 3 gereinigt, in dem sie durch das Zulaufrohr 14 in den Ringraum 24 eingeleitet wird und durch die zylindrische Siebwandung strömt, während Verunreinigungen in dem Ringraum 24 zurückgehalten werden. Die auf diese Weise gereinigte Flüssigkeit strömt in den unteren Raum des Außenbehälters 1 und kann durch den Auslaß 22 entnommen werden.

Nachdem sich in dem Ringraum 24 eine Menge von Verunreinigungen angesammelt hat, was mit Hilfe des Detektors 23 ermittelt wird, wird das Ventil 25 geschlossen und damit die Einleitung von Flüssigkeit unterbrochen. Mit Hilfe eines von dem Detektor abgegebenen Signals wird der Antriebsmotor 18 eingeschaltet, so dass der rotierbare Behälter 2 und die Siebtrommel 9 derart in Rotation versetzt werden, dass die Verunreinigungen von der Siebtrommel 9 abgeschleudert und aus dem Behälter 2 herausgeschleudert werden. Hierfür sind Fliehkräfte verantwortlich, die die Verunreinigungen radial nach außen ziehen. Aufgrund der kegelstumpfförmigen Gestaltung der äußeren Wandungen entsteht neben der radialen auf die Verunreinigungen wirkenden Kraftkomponente eine axiale Komponente, die dafür sorgt, dass die Verunreinigungen etwa parallel zur Wand des rotierenden Behälters 2 nach oben und außen gedrückt werden. Nachdem die Verunreinigungen den oberen Rand des Kegelstumpfes 10 passiert haben, werden sie radial von diesem abgeschleudert und vom Außenbehälter 1 aufgefangen.

An der Innenwand des Außenbehälters 1 werden die Verunreinigungen innerhalb des oberen Raumes 3 (Figur 1) nach unten fallen und auf dem Ringboden 5 aufgefangen. Der Behälter 2 wird solange mit einer derartig hohen Drehzahl rotiert, bis alle Verunreinigungen aus dem Ringraum 24 herausgeschleudert wurden. Während der Rotation des Behälters 2, vorzugsweise nach Erreichen der Höchstdrehzahl, wird das Ventil 29 geöffnet, um eine Spülflüssigkeit durch das Spritzrohr 13 mit dessen Öffnungen auf Siebwandung, d.h. die zylindrische Siebtrommel 9 zu leiten, so dass an der Siebtrommel anhaftende Verunreinigungen mit Hilfe der Spülflüssigkeit abgespült werden. Die Spülflüssigkeit kann entweder Frischwasser oder gereinigte Flüssigkeit sein. In nicht dargestellter Weise könnte die Spülflüssigkeit auch einfach von oben auf die Siebtrommel 9 aufgebracht werden und nicht durch ein in den Behälter 2 hineinragendes Rohr direkt an die Innenfläche der Siebtrommel 9 gespritzt werden.

Nachdem die Verunreinigungen abgeschleudert worden sind, wird der Antriebsmotor 18 ausgeschaltet und die Bremse des Antriebsmotors 18 aktiviert, so dass der Behälter 2 und die Siebtrommel 9 rasch abgebremst werden. Anschließend wird erneut das Ventil 25 zum Einleiten weiterer Flüssigkeit geöffnet und ein erneuter Reinigungszyklus beginnt.

Das Abschleudern der sich im Ringraum 24 ansammelnden Verunreinigungen erfolgt bei einer Filtervorrichtung gemäß Figur 3 auf eine andere Weise. Nachdem sich innerhalb des Ringraums 24 eine bestimmte Menge an Verunreinigungen angesammelt hat, was mit Hilfe des Detektors 23 ermittelt wird, wird ein von dem Detektor abgegebenes Signal verwendet, um den Antriebsmotor 18 einzuschalten, woraufhin der rotierbare Behälter 2 rasch gedreht wird. Aufgrund der durch die Rotation entstehenden Fliehkräfte sowohl auf die angesammelten Verunreinigungen als auch auf die kegelstumpfförmige Umfangswandung (Kegelstumpf 30), wird aufgrund der hohen Drehzahl die Form des Kegelstumpfes 30 verändert, der sich elastisch verformt. Der Kegelstrumpf 30 nimmt beim Erreichen einer bestimmten Drehzahl die in Figur 3 dargestellte Form 30a an, die etwa der einer Kreisschreibe entspricht. Die Rippen 11 sorgen für eine Führung für die Verunreinigungen auf der kreisscheibenförmigen Wandung nach außen (wie Flügel eines Ventilators).

In Fig. 4 ist gezeigt, dass die Wandung des Außenbehälters 1 nach Art eines Gebläses oder Verdichterauslasses erweitert sein kann. Die Verunreinigungen werden in den sich schneckenförmig erweiternden Bereich des Außenbehälters 1 geschleudert und durch den Auslaßanschluß zum Auswerfen von Filterrückständen herausgeschleudert, wie durch Pfeil 31 in Figur 4 angedeutet ist.

Während der Rotation kann auch hier mit Hilfe des Spritzrohres 12 eine Spülflüssigkeit auf die zylindrische Siebtrommel 9 aufgebracht werden, so daß sich an der Siebwandung festsetzende Verunreinigungen gelöst und leichter abgeschleudert werden können. Aufgrund der hohen Drehzahl wird die Spülflüssigkeit schlagartig zerstäubt und dringt vom Innenraum der Siebtrommel in den Ringraum 24 ein und gelangt in den oberen Raum 3 des Außenbehälters 1. Flusen und andere Filterrückstände werden mit Hilfe der Spülflüssigkeit entfernt.

Alternativ kann durch das Spritzrohr 12 (Fig. 1, 3, 6) ein unter Druck stehendes Gas, vorzugsweise Druckluft, eingeleitet werden, das anstelle einer Spülflüssigkeit dafür sorgt, dass ein Druckgasstrom durch das Spritzrohr 13 auf die Siebwandung strömt, um Verunreinigungen, die sich dort angesammelt haben, von der Siebwandung abzulösen. Hierzu kann das Ventil 29 derart ausgebildet sein, das es schlagartig geöffnet und rasch geschlossen werden kann, um bei schlagartiger Öffnung für eine besonders wirksame Ablösung der Verunreinigungen von der Siebwandung zu sorgen.

Das in Fig. 6 dargestellte Leitblech 34 sorgt für eine Führung von aus dem Innenraum des inneren Behälters 2 herausgeschleuderten Verunreinigungen, die sich zuvor im Ringraum 24 des Behälters 2 angesammelt haben. Mittels des Leitblechs 34 werden die Verunreinigungen etwa auf eine der Form (im Querschnitt) entsprechende Bahn geleitet, so dass die Verunreinigungen durch das Leitblech 34 nach schräg unten abgeleitet werden und auf den Ringboden 5 fallen, von wo aus sie abgenommen werden können. Ohne das Leitblech 34 würden die Verunreinigungen bei ausreichend großer Geschwindigkeit an die Stege 17, die Zentralplatte 16 oder die Abdeckung 32 geschleudert werden; dort könnten die Verunreinigungen in unerwünschter Weise haften bleiben, was durch das Leitblech 34 vermieden wird.

## Patentansprüche

1. Filtervorrichtung zum Reinigen von Verunreinigungen enthaltenden Flüssigkeiten, insbesondere mit Feststoffen verunreinigten Abwässern,
mit einer um eine senkrechte Achse drehbar gelagerte Siebtrommel (9) zum Ausfiltern der Verunreinigungen, der die zu reinigende Flüssigkeit auf der Außenseite zugeführt und von deren Innenseite die gereinigte Flüssigkeit abgeführt wird, mit einem wahlweisen einschaltbaren Drehantrieb (18) für die Siebtrommel (9) zum Abschleudern der auf der Außenseite abgelagerten Verunreinigungen, und mit einem die Siebtrommel (9) umgebenden, zusammen mit dieser angetriebenen Behälter (2) zum Auffangen der abgeschleuderten Verunreinigungen,
dadurch gekennzeichnet, dass
der Behälter (2) kegelstumpfförmig und nach oben erweitert ausgebildet ist, an dessen erweitertem Ende (26) ein Auslass (8) für die Verunreinigungen vorgesehen ist.

2. Filtervorrichtung nach Anspruch 1,
dadurch gekennzeichnet, dass die Umfangswandung (30) des angetriebenen Behälters (2) aus einem elastisch verformbaren Material besteht, so dass dessen Form während der Rotation aufgrund von Fliehkräften derart veränderbar ist, dass aufgenommene Verunreinigungen herausgeschleudert werden.

3. Filtervorrichtung nach Anspruch 1,
gekennzeichnet durch ein Leitblech (34) zum Ableiten der von der Siebtrommel (9) abgeschleuderten Verunreinigungen.

4. Filtervorrichtung nach Anspruch 3,
dadurch gekennzeichnet, dass das Leitblech (34) ringförmig ausgebildet ist.

5. Filtervorrichtung nach Anspruch 3 oder 4,
dadurch gekennzeichnet, dass das Leitblech (34) an dem angetriebenen Behälter (2) angeordnet ist.

6. Filtervorrichtung nach Anspruch 3 oder 4,
dadurch gekennzeichnet, dass das Leitblech (34) ortsfest angeordnet ist.

7. Filtervorrichtung nach Anspruch 1,
dadurch gekennzeichnet, dass um den rotierenden Behälter (2) im Bereich des erweiterten Endes (26) ein Außenbehälter (1) in der Form eines sich schneckenförmig erweiterten Auslasses (8) zum Auswerfen der abgeschleuderten Verunreinigungen angeordnet ist.

8. Filtervorrichtung nach einem der vorstehenden Ansprüche,
gekennzeichnet durch mindestens einen Detektor (23) zum Abfühlen der Menge der vom angetriebenen Behälter (2) aufgenommenen Verunreinigungen.

9. Filtervorrichtung nach einem der vorstehenden Ansprüche,
gekennzeichnet durch ein Spritzrohr (13) zum Zuführen von Reinigungsflüssigkeit oder Gas in das Innere der Siebtrommel (9) zwecks Ablösung der Verunreinigungen.

## Claims

1. A filter device for purifying liquids containing impurities, in particular waste waters contaminated with solid particles, having a screening drum (9) for filtering off the impurities which is mounted such that it is rotatable about a vertical axis, the liquid to be purified being supplied to said drum on the outside and the purified liquid being discharged from its inside, having a rotary drive (18) for the screening drum (9) for centrifuging off the impurities which have deposited on the outside, which drive may be switched on as desired, and having a container (2) for trapping the impurities which have been centrifuged off, which container surrounds the screening drum (9) and is driven together therewith, characterised in that the container (2) is of a truncated construction and widens towards the top, and an outlet (8) for the impurities is provided at its widened end (26).

2. A filter device according to Claim 1, characterised in that the peripheral wall (30) of the driven container (2) is made of a resiliently deformable material, so that, as a result of centrifugal forces, its shape may change during rotation such that impurities which are collected are centrifuged out.

3. A filter device according to Claim 1, characterised by a baffle plate (34) for deflecting the impurities centrifuged off by the screening drum (9).

4. A filter device according to Claim 3, characterised in that the baffle plate (34) is of an annular construction.

5. A filter device according to Claim 3 or 4, characterised in that the baffle plate (34) is arranged on the driven container (2).

6. A filter device according to Claim 3 or 4, characterised in that the baffle plate (34) is arranged in fixed manner.

7. A filter device according to Claim 1, characterised in that an outer container (1) in the form of an outlet (8) extending in the shape of a worm for ejecting the impurities centrifuged off is arranged about the rotating container (2) in the region of the widened end (26).

8. A filter device according to one of the preceding claims, characterised by at least one detector (23) for detecting the quantity of the impurities collected by the driven container (2).

9. A filter device according to one of the preceding claims, characterised by a spray pipe (13) for supplying cleaning fluid or gas into the interior of the screening drum (9) for the purpose of dissolving the impurities.

## Revendications

1. Dispositif de filtrage pour le nettoyage de liquides contenant des impuretés, en particulier des eaux usées souillées avec des matières solides, équipé d'un tambour tamiseur (9) logé de façon pivotante autour d'un axe vertical pour l'élimination par filtrage des impuretés, auquel est amené le liquide à nettoyer sur le côté extérieur et par le côté intérieur duquel le liquide nettoyé est évacué, d'une commande de rotation (18) pouvant être enclenchée de façon optionnelle pour le tambour tamiseur (9) destiné à l'évacuation par projection des impuretés déposées sur le côté extérieur, et d'un récipient (2) entourant le tambour tamiseur (9), entraîné conjointement avec celui-ci et destiné à recueillir les impuretés évacuées par projection,
caractérisé en ce que le récipient (2) a une forme de cône tronqué et est conçu de façon élargie vers le haut, à l'extrémité élargie (26) duquel est prévue une évacuation (8) pour les impuretés.

2. Dispositif de filtrage selon la revendication 1, caractérisé en ce que la paroi périphérique (30) du récipient (2) entraîné est à base d'un matériau déformable de façon élastique, de sorte que sa forme peut être modifiée pendant la rotation sous l'effet des forces centrifuges de telle façon que les impuretés absorbées soient évacuées par projection.

3. Dispositif de filtrage selon la revendication 1, caractérisé par une tôle-guide (34) pour la déviation des impuretés évacuées par projection du tambour tamiseur (9).

4. Dispositif de filtrage selon la revendication 3, caractérisé en ce que la tôle-guide (34) est conçue avec une forme annulaire.

5. Dispositif de filtrage selon la revendication 3 ou 4, caractérisé en ce que la tôle-guide (34) est disposée sur le récipient (2) entraîné.

6. Dispositif de filtrage selon la revendication 3 ou 4, caractérisé en ce que la tôle-guide (34) est disposée dans un endroit fixe.

7. Dispositif de filtrage selon la revendication 1, caractérisé en ce qu'un récipient extérieur (1) est disposé autour du récipient (2) rotatif dans la zone de l'extrémité élargie (26) sous la forme d'une évacuation (8) élargie avec une forme hélicoïdale pour l'éjection des impuretés évacuées par projection.

8. Dispositif de filtrage selon l'une quelconque des revendications précédentes, caractérisé par au moins un détecteur (23) destiné à la détection de la quantité des impuretés absorbées par le récipient (2) entraîné.

9. Dispositif de filtrage selon l'une quelconque des revendications précédentes, caractérisé par un tuyau pulvérisateur (13) destiné à l'arrivée du liquide de nettoyage ou de gaz à l'intérieur du tambour tamiseur (9) pour le décollement des impuretés.
